# EUROPÄISCHE PATENTSCHRIFT

(11) **EP 1 756 357 B1**
(45) Veröffentlichungstag und Bekanntmachung des Hinweises auf die Patenterteilung: **12.01.2011**
(21) Anmeldenummer: 05714742.3
(22) Anmeldetag: 07.04.2005
(51) Int. Cl.: D21F 7/08, D04H 1/54, B32B 5/26, B29C 43/24

(54) **PAPIERMASCHINEN-PRESSFILZ UND VERFAHREN SOWIE VORRICHTUNG ZU SEINER HERSTELLUNG**
PRESS FELT FOR PAPER MACHINE AND METHOD AND DEVICE FOR PRODUCING SAID FELT
FEUTRE POUR MACHINES A PAPIER ET PROCEDE ET DISPOSITIF PERMETTANT DE LE PRODUIRE

(30) Priorität: 08.04.2004 CH 614042004
(43) Veröffentlichungstag der Anmeldung: 28.02.2007
(73) Patentinhaber: EMS-CHEMIE AG, 7013 Domat-Ems (CH)
(72) Erfinder: WEISS, Alfred, CH-7015 Tamins (CH); BENDER, Klaus, CH-7402 Bonaduz (CH); SPINDLER, Jürgen, CH-7013 Domat/Ems (CH)
(74) Vertreter: Lauer, Joachim
(86) Internationale Anmeldenummer: PCT/CH2005/000200
(87) Internationale Veröffentlichungsnummer: WO 2005/098128

(56) Entgegenhaltungen:
- EP-A- 0 741 204
- EP-A- 0 969 143
- WO-A-00/51801
- WO-A-02/09089
- WO-A-03/091498
- WO-A-2004/085727
- DE-A- 19 604 726
- DE-C- 19 803 493
- GB-A- 735 175
- GB-A- 2 140 739
- US-A1- 2001 032 696
- US-A1- 2003 194 930
- US-B1- 6 294 036

## Beschreibung

### TECHNISCHES GEBIET

Die vorliegende Erfindung betrifft ein Verfahren zur Herstellung eines Pressfilzes gemäss dem Oberbegriff des Anspruchs 1.

Pressfilze dienen in Papiermaschinen dazu, die Papiermasse zu unterstützen und Wasser aus der Papiermasse während des Pressvorganges aufzunehmen. Eine erste wichtige Eigenschaft der Pressfilze ist insofern ihre Permeabilität.

Eine weitere wichtige Eigenschaft der Pressfilze ist ihre Lebensdauer im Einsatz auf der Papiermaschine und verbunden damit ihre Beständigkeit ohne Faserverlust, mit zudem möglichst konstanten Eigenschaften über die Gebrauchsdauer. Für einen abnützungs-, qualitäts- oder schadensbedingten Austausch der Pressfilze muss die Papierproduktion unterbrochen und die Papiermaschine angehalten werden.

Eine dritte wichtige Eigenschaft der Pressfilze ist ihre Oberflächenbeschaffenheit, da von dieser die Oberflächenbeschaffenheit des Papiers mitbestimmt wird. Je gleichmässiger und glatter der Pressfilz ist, um so glatter und gleichmässiger wird die Papieroberfläche.

Der Bedarf an möglichst glatten Papieren steigt ständig, da sich glatte Papiere mit den modernen Drucktechniken besser bedrucken lassen. Insofern kommt der Oberflächenbeschaffenheit der Pressfilze eine zunehmende Bedeutung zu.

### STAND DER TECHNIK

Die in der Praxis verwendeten Papiermaschinenfilze werden hauptsächlich aus Polyamid 6- oder Polyamid 66-Fasern bzw. -Monofilen hergestellt. Die EP-A 0 287 297 schlagt dafür aber auch Fasern aus Polyamid 12 und die EP-A 0 372 769 Fasern aus Polyamid 11 vor.

Zur Verbesserung der Faserverankerung werden teilweise auch Schmelzklebefasern eingesetzt, d. h. Fasern aus Polymeren mit einem Schmelzpunkt, der niedriger ist als der der restlichen Fasern (WO 85/01693).

Der Einsatz von Fasern mit Komponenten, die bei unterschiedlichen Temperaturen schmelzen, d. h. insbesondere von Bikomponentenfasern, ist ebenfalls bekannt. DE 92 10 235 U1 beschreibt Faservliese aus thermoplastischen, schmelzgesponnenen Polymerfasern, die sich für die Herstellung von Paplermaschinenfilzen eignen, welche aus einem Grundgewebe und wenigstens einer darauf aufgenadelten Schicht Faservlies bestehen.

EP 0 741 204 A2 beschreibt die Verwendung von Bikomponentenfasern des Kern-Mantel-Typs zur Herstellung von Pressfilzen**.** Durch die Auswahl der Bikomponentenfasern des Kern-Mantel-Typs soll im wesentlichen die Oberflächenqualität, die Laufeigenschaften des Filzes, die Wiedererholung und die Entwässerung verbessert werden.

DE 19803493 beschreibt ein Verfahren zur Herstellung eines Pressfilzes mit speziellen Bikomponentenfasern, um die Abrasionsbeständigkeit, die Laufeigenschaften, die Wedererholung und die Entwässerung zu verbessern. Eine bessere Oberflächenqualität wird ebenfalls festgestellt.

In EP 0 741 204 A2, DE 19604726 C und DE 19803493 wurde eine bessere Oberflächenqualität festgestellt. Die beruht aber im wesentlichen auf einer besseren Einbindung der Fasern und einer besseren Abdeckung der oberen Vlieslagen durch den Einsatz von Bikomponentenfasern.

Wie bereits erwähnt, wird die Gleichmässigkeit der Papieroberfläche, die mit einem Pressfilz erreicht werden kann, immer wichtiger. Aus diesem Grund konzentrierte sich die Entwicklung immer mehr auf die Erzielung möglichst gleichmässiger, feiner und glatter Oberflächen.

Ansatzpunkte zur Erreichung dieses Zieles sind z.B. der Einsatz von sehr feinen Fasern oder von Flachfasern in der obersten Vlieslage des Pressfilzes. Auch nachträgliche Beschichtungen mit Polymeren wurden vorgeschlagen und teilweise realisiert.

EP 0273613 beschreibt z.B. einen Pressfilz der eingangs genannten Art, bei welchem das thermoplastische Bindermaterial durch Beschichten aufgebracht wurde. Die gewünschte Oberflächenglätte wird nach dem Aushärten der Beschichtung durch Schleifen erreicht.

Die WO 03/091498 beschreibt einen grundsätzlich ähnlichen Pressfilz, bei welchem aber der ganze Filz einschliesslich Grundgewebe mit einer reaktiven, vernetzenden Kunststoffdispersion getränkt wird. Nach der Aushärtung bzw. Vernetzung ist eine solche Oberfläche nicht mehr thermoplastisch verformbar und wird deshalb durch Nachschleifen auf die gewünschte Oberflächenglätte gebracht. In gewissen Fällen, in welchen die gewünschte Oberflächenglätte auch durch alternative Massnahmen erreicht werden kann, ist Nachschleifen ggf. nicht notwendig. Als alternative Massnahmen werden erwähnt die Auswahl des Grundgewebes sowie der Vlieslagenfaser, das Ausmass der Behandlung mit dem Polymermaterial sowie die Auswahl des Polymers als solchem. Des weiteren könne der Pressfilz zur Erzielung einer glatten Oberfläche kalandriert werden. Mit einer reinen Kalandrierung ohne Nachbehandlung ist aber keine hohe Oberflächengüte erreichbar.

### DARSTELLUNG DER ERFINDUNG

Die vorliegende Erfindung geht von der Erkenntnis aus, dass ausreichend homogene und glatten Oberflächen im Hinblick z.B. auf die an die Beständigkeit und die Permeabilität zu stellenden Anforderungen nicht in jedem Fall durch den Einsatz von sehr feinen Fasern oder von Flachfasern in der obersten Vlieslage des Pressfilzes zu erreichen ist. Die Beschichtungstechnik mit anschliessendem Beschleifen oder Kalandrieren bedingt aufwendige zusätzliche Arbeitsgänge im Herstellungsprozess und ist von daher nachteilig. Ausserdem wird die durch Kalandrieren erreichbare Oberflächenglätte durch die elastische Spannung zumindest der Fasern der obersten Vlieslage und ihre dadurch bedingte Tendenz, sich in gewissem Umfang nach dem Kalandrieren wieder aufzurichten, erheblich eingeschränkt. Gute Ergebnisse können dabei auch nur mit sehr feinen Fasern erwartet werden.

Der Erfindung liegt die Aufgabe zugrunde, ein Verfahren zur Herstellung eines Pressfilzes der eingangs genannten Art anzugeben, welcher bei möglicher hoher Beständigkeit und möglicher hoher Permeabiltät auch ohne aufwändiges Beschleifen eine Oberfläche aufweist, die den gestiegenen Anforderungen an ihre Homogenität und Glätte gerecht wird. Weiterhin soli das Verfahren sich rationell ausführen lassen und zusätzliche Arbeitsgänge vermeiden.

Diese Aufgabe wird erfindungsgemäss gelöst durch ein Verfahren mit den Merkmalen des Anspruchs 1.

Die oberste Vlieslage des Pressfilzes wird demnach mit der glatten Fläche unter Druck gesetzt, wenn sie eine Temperatur oberhalb der Schmelztemperatur des thermoplastischen Bindermaterials aufweist. Das thermoplastische Bindermaterial ist dabei aufgeschmolzen. Anders als dies z.B. beim Kalandrieren der Fall ist, wird der Druck mit der glatten Fläche jedoch aufrechterhalten, bis sich die oberste Vlieslage auf eine Temperatur unterhalb der Schmelztemperatur des thermoplastischen Bindermaterials abgekühlt und sich dieses verfestigt hat. Die Form der oberen Vlieslage und ihre Oberfläche wird dadurch In einem bestimmten Zustand wie eingefroren, wobei die Oberflächenglätte durch die Glätte der Fläche bestimmt wird, mit der der Druck ausgeübt wird. Selbst dickere und abrasionsbeständigere Fasern in der oberen Vlieslage können sich nicht mehr aufrichten und die Oberflächenglätte beeinträchtigen.

Der Pressfilz kann für die Herstellung von hochwertigen Papiersorten, die sich durch eine sehr gleichmässige Qualität auszeichnen, vorteilhaft eingesetzt werden.

Durch seine besonders glatte Oberfläche und die sich ergebende Einbettung der Fasern der obersten Vlieslage in das thermoplastische Bindermaterial weist der erfindungsgemässe Pressfilz in jedem Fall, auch bei Verwendung von sehr dünnen Fasern, eine hohe Beständigkeit insbesondere auch gegen Faserverlust auf.

Bevorzugt umfasst der Pressfilz als weitere Lage mindestens noch ein insbesondere tragendes Grundgewebe.

Wie bei Pressfilzen für Papiermaschinen ebenfalls üblich, ist der Pressfilz vorzugsweise thermofixiert. Das Thermofixieren lässt sich mit Vorteil im gleichen Arbeitsgang wie die Oberflächenglättung ausführen, sofern, wie dies ebenfalls bevorzugt ist, das thermoplastische Bindermaterial einen Schmelzpunkt aufweist, welcher niedriger als die für das Thermofixieren erforderliche Temperatur ist. Im Hinblick auf seinen Einsatz in der Papiermaschine sollte der Schmelzpunkt des thermoplastischen Bindermaterials jedoch mindestens 110°C betragen.

Sofern die Vlieslage thermoplastische Fasern enthält, was wegen der Beständigkeit von hierunter fallenden Fasern von Vorteil ist, sollten diese einen Schmelzpunkt aufweisen, welcher höher, insbesondere mindestenes 30°C höher als der Schmelzpunkt des thermoplastischen Bindermaterials und vorzugsweise auch höher als die für das Thermofixieren erforderliche Temperatur liegt.

Weiter bevorzugt ist das thermoplastische Bindermaterial:
- ein Copolyamid, das aus mindestens zwei verschiedenen Monomeren aus der Gruppe Caprolactam, Laurinlactam, Dicarbonsäuren mit 4-12 C-Atomen, Terephthalsäure, Isophthalsäure, Dimersäure mit C-Atomen, lineare alpha , omega -Diamine mit 2-12 C-Atomen und 2-Methylpentamethylendiamin, aufgebaut ist; oder
- ein Polyamid aus der Gruppe Polyamid 12, Polyamid 11, Polyamid 6; oder
- ein Polyolefin, insbesondere Polyethylen, Polypropylen oder Polybutylen; oder
- ein thermoplastisches Elastomer auf Polyamid-, Silikon-, Polyurethan-, Polyester- oder Polyether-Basis; oder
- ein Copolyester.

Die Vlieslage enthält bevorzugt thermoplastische, schmelzgesponnene Polymerfasern, ggf. teilweise in Form von Flachfasern, welche insbesondere aus Polyamid aus der Gruppe Polyamid 6, Polyamid 46, Polyamid 66, Polyamid 12, Polyamid 11, Polyamid 6T/66, Polyamid 6T/6, Polyamid 6T/6I oder Polyamid 12T bestehen.

Der Titer der für die Vlieslage eingesetzten Fasern sollte kleiner als 30 dtex, vorzugsweise sogar kleiner als 8 dtex sein.

Im Hinblick auf die nachstehend noch erläuterte bevorzugte Verwendung von Bikomponentenfasern bei der Herstellung des Pressfilzes werden die vorgängig genannten Materialien mit der tieferschmelzenden Komponente jeweils für das thermoplastische Bindermaterial und mit der höherschmelzenden Komponete jeweils für die Vlieslage bevorzugt in einer der folgenden Kombinationen verwendet:
- Copolyamid mit Schmelzpunkt im Bereich 110-180°C und Polyamid 6; oder
- Copolyamid mit Schmelzpunkt im Bereich 110-180°C und Polyamid 66; oder
- Polyamid 6 und Polyamid 66; oder
- Polyamid 12 und Polyamid 6; oder
- Polyamid 12 und Polyamid 66; oder
- Polyamid 6 und Polyamid 6T/6I; oder
- Polyamid 6 und Polyamid 6T/66; oder
- Polyamid 6 und Polyamid 6T/6.

Das Gewichtsverhältnis zwischen dem thermoplstischen Bindermaterial und der Vlieslage kann zwischen 5 : 95 und 95 : 5 betragen, vorzugsweise jedoch zwischen 15 : 85 und 35 : 65. Für viele Anwendungen wird ein Wert um etwa 25 : 75 günstig sein. Durch Variation dieses Gewichtsverhältnisses lässt sich z.B. die Permeabilität des Pressfilzes variieren und nach Bedarf einstellen.

Unterhalb der obersten Vlieslage können auch noch weitere Vlieslagen eingesetzt werden, bevorzugt mindestens noch eine weitere Vlieslage, welche ebenfalls mit einem thermoplastischen Bindermaterial verfestigt ist. Hierbei kann mit Vorteil durch Variation der Fasern der weiteren Vlieslage und/oder des Mengenverhältnisses von Fasern zum thermoplastischem Bindermaterial gegenüber der obersten Vlieslage eine Optimierung der Eigenschaften des erfindungsgemässen Pressfilzes erreicht werden.

Erfindungsgernäss wird ein unbehandelter (d.h. zumindest noch nicht wie vorstehend angegeben behandelter) Pressfilz hergestellt, welcher das thermoplastische Bindermaterial zunächst in Form von Fasern enthält. Bei der für die Glättung auf die bereits beschriebene Art sowieso erforderlichen Erhitzung des Vlieses wird das thermoplastische Bindermaterial aufgeschmolzen, wodurch dann die Verbindung und Verfestigung der Vlieslage erst entsteht. Ein zusätzlicher Arbeitsschritt zum Einbringen von Verfestigungsmaterial in die Vlieslage (oder umgekehrt) wie z.B. Beschichten ist nicht erforderlich. Das Einbringen von Klebefasern oder von Bikomponentenfasern in die Vlieslage bedarf ebenfalls keines zusätzlichen Arbeitsschrittes.

Wie weiter oben bereits beschrieben, wird die oberste Vlieslage des Pressfilzes bei aufgeschmolzenem thermoplastischem Bindermaterial mit der glatten Flache unter Druck gesetzt während sie einschliesslich des thermoplastischen Bindermaterials auf eine Temperatur unterhalb der Schmelztemperatur des thermoplastischen Bindermaterials abgekühlt wird.

Verfahrenstechnisch wird der unbehandelte Pressfilz zum Erhitzen über eine geheizte Walze und zum Abkühlen über eine dieser nachgeordnet Kühlfläche bewegt.

Für die meisten Anwendungen wird der Pressfilz thermofixiert werden müssen. Bei geeigneter Wahl der Materialien kann, wie bereits beschrieben, das Aufschmelzen des thermoplastischen Bindermaterials, d.h. hier der Klebefasern und/oder der Klebekomponente der Bikomponetenfasern, in einem mit dem Thermofixieren ausgeführt werden und bedeutet dann überhaupt keinen zusätzlichen Arbeitsschritt mehr. Die für das Thermofixieren in der Regel ebenfalls notwendige Spannung kann mit Vorteil zumindest teilweise auch zur Aufbringung des für die Oberflächenglättung notwendigen Drucks eingesetzt werden.

Da der Pressfilz in der Papiermaschine immer in Endlosform, sei es als nahtloser Filz oder als Nahtfilz, d.h. als in sich geschlossenes, umlaufendes Band verwendet wird, wird der unbehandelte Pressfilz unter Verwendung eines handelsüblichen Thermofixlerkalanders mit einer geheizten Kalanderwalze und einer zu dieser parallel angeordneten weiteren Kalanderwalze unter Spannung gesetzt(d.h. angespannt), und auf der geheizten Kalanderwalze bezüglich der Klebefasern und/oder der Klebekomponente der Bikomponentenfasern aufgeschmolzen und er kann gleichzeitig thermofixiert werden. Zur Abkühlung des aufgeschmolzenen, dann die Verbindung und nachher Verfestigung bildenden Materials unter Druck mit einer glatten Fläche genügt es, zwischen den beiden Kalanderwalzen insbesondere in Laufrichtung des Bandes unmittelbar hinter der geheizten Kalanderwalze z.B. einen das Band etwas nach aussen drückenden, mit der gewünschten Fläche versehenen Kühlschuh vorzusehen. Als apparative Alternative zu der vorgenannten Kühleinrichtung kommen auch eine oder mehrere Kühlwalzen in Frage.

Bei der Herstellung des unbehandelten Pressfilzes können Bikomponentenfasern für die Vlieslage verwendet werden, bei welchen die beiden Komponenten in Kem-Mantel-Konfiguration und/oder Seite-Seite-Konfiguration vorliegen.

Bei Verwendung von Bikomponentenfasern in der Vlieslage können den Bikomponentenfasern auch noch feintitrige Monokomponentenfasern und/oder Flachfasern beigemischt werden. Der Anteil an weiteren Fasern kann hierbei bis zu 95% betragen, bevorzugt jedoch nicht mehr als ca. 75%.

Gemäss einer weiteren bevorzugten Ausführungsform wird der unbehandelte Pressfilz aus mehreren Vlieslagen hergestellt. Hierbei kann mindestens eine der weiteren Vlieslagen ebenfalls ein thermoplastisches Bindermaterial in Form von thermoplastischen Klebefasern und/oder als thermoplastische Klebekomponente von Bikomponentenfasern verteilt enthalten. In der an die Oberfläche des Pressfilzes angrenzenden Vlieslage kann hierbei das Verhältnis des thermoplastischen Bindermaterials zu dem übrigen Material dieser Lage grösser gewählt werden, als in der mindestens einen, ebenfalls mit thermoplastischem Bindermaterial versehenen Lage.

Wie bei Pressfilzen an sich üblich kann schliesslich noch ein Grundgewebe oder ein Grundgelege vorgesehen sein, auf welches die Vlieslage/n bei der Herstellung des unbehandelten Pressfilzes aufgenadelt wird/werden.

Die Erfindung wird nachstehend anhand eines Ausführungsbeispiels und eines Vergleichsbeispiels noch näher erläutert.

### KURZE ERLÄUTERUNG DER ZEICHNUNG

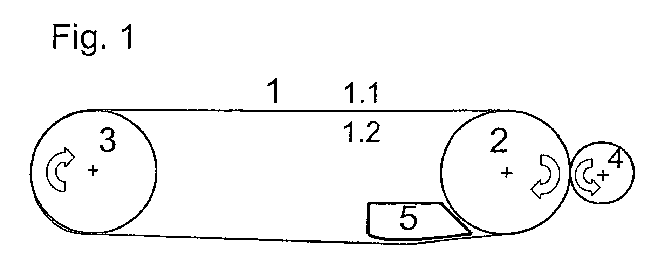

Die Zeichnung zeigt schematisch in einer Fig. 1 eine Vorrichtung zur Herstellung eines Pressfilzes unter Ausführung des erfindungsgemässen Herstellungsverfahrens.

### WEGE ZUR AUSFÜHRUNG DER ERFINDUNG

Fig 1. zeigt einen speziell ausgerüsteten Thermofixierkalander. Ein unbehandelter Pressfilz 1 für einen herzustellenden Pressfilz mit einem tragenden Grundgewebe im Bereich seiner Aussenseite 1.1 und mindestens einer darauf aufgenadelten, unter Verwendung von Klebefasern und/oder Bikopomponentenfasern hergestellten Vlieslage auf seiner Innenseite 1.2 läuft als Endlosband 1 über eine beheizte Kalanderwalze 2 und eine unbeheizte Kalanderwalze 3 unter einer vorgegebenden Spannung. Die mindestens eine Vlieslage ist dabei gegen die Oberfläche der beheizten Kalanderwalze 2 gerichtet.

Die Temperatur der beheizten Kalanderwalze 2 und die Verweilzeit des unbehandelten Pressfilzes auf der beheizten Kalanderwalze 2 wird polymerspezifisch eingestellt, die Temperatur z.B. auf einen Wert zwischen 110°C und 220°C und die Verweilzeit auf einer einen Wert zwischen 30 sec und 120 sec. Der Wärmeübertrag sowie eine ggf. gewünschte Verdichtung der Vlieslage/n des unbehandelten Pressfilzes 1 kann über eine oder mehrere zusätzliche Anpresswalzen (4) am Heizkalander 2 verstärkt werden.

Ein Kühlschuh 5 der sich im Ablaufzwickel zwischen dem Pressfilz 1 und der beheizten Kalanderwalze 2 befindet und der z.B. mit Kaltwasser gekühlt wird (< 15°C) kühlt die innere Oberfläche 1.2 des Pressfilzes unmittelbar nach dem Verlassen der heissen Kalanderwalze 2 ab und fixiert die Oberflächenstruktur der dort angeordneten Vlieslage/n.

Die Kühlung ist erforderlich, um die angestrebte Oberflächenqualität zu erreichen. Ohne eine Kühleinrichtung würde sich aufgrund der Spannungen innerhalb des Vlieslage die Filzoberfläche wellen und zusätzlich würde die Vliestruktur wieder hervortreten, was sich negativ auf die Oberflächenglätte auswirken würde.

Zum allgemeinen Verständnis soll auch noch erwähnt werden, dass später er Pressfilz auf der Papiermaschine genau umgekehrt aufgespannt wird: Die geglättete Seite 1.2 wird dann papierseitig laufen, und die Seite 1.1 auf der Seite der Walzen (Führungsrollen).

### BEISPIEL (Beispiel 1):

Verwendet wurden Fasern des Untemehmensbereichs EMS-GRILTECH der EMS-CHEMIE AG. CH-7013 Domat/Ems, Schweiz.

Aus Bikomponentenfasern des Typs BA 140, bestehend aus einer PA 6 Komponente A und einer Copolyamid-Klebekomponente B , hergestellt aus Caprolactam und Laurinlactam mit einem Schmelzbereich von 125-140 °C (Monomerverhältnis 50 : 50 Gew.-%) im Titer 8 dtex, und 17 dtex Polyamid 6 Fasern des Typs TM 5000 wurde ein erstes Vlies mit einem Flächengewicht von 150 g/m² hergestellt, wobei das Vlies einen Bikomponenten-Klebefaseranteil von 20% enthielt.

Aus Bikomponentenfasern des Typs BA 140 im Titer 8 dtex, und 6.7 dtex Polyamid 6 Fasern des Typs TM 5100 wurde ein Vlies mit einem Flächengewicht von 100 g/m² hergestellt, wobei das Vlies einen Bikomponenten-Klebefaseranteil von 30% enthielt.

Aus Bikomponentenfasern des Typs BA 140 im Titer 3.3 dtex, und 6.7dtex Polyamid 6 Fasern des Typs TM 5100 wurde ein Vlies mit einem Flächengewicht von 100 g/m² hergestellt, wobei das Vlies einen Bikomponenten-Klebefaseranteil von 50% enthielt.

Die drei Vliese bzw. Vlieslagen wurden vorvernadelt und zur Herstellung eines unbehandelten Pressfilzes verwendet. Der unbehandelte Pressfilz bestand insgesamt aus einem Grundgewebe mit zwei Vlieslagen aus 100% PA 6 Fasern, und den drei Vlieslagen wie oben beschrieben.

Die insgesamt 6 Schichten A-G des unbehandelten Pressfilzes waren wie folgt angeordnet und aufgebaut:
- A: Grundvlies:: 200 g/m2, 100% PA 6 Faser, 22 dtex. TM 5000
- B: Grundgewebe:: Monofilgewebe 650 g/m2
- C: Grundvlies:: 200 g/m2, 100% PA 6 Faser, 22 dtex, TM 5000
- D: Deckvlies:: 20% BA140 (PA6/CoPA K/M 50%/50%) 8 dtex, 80% TM 5000 E: 17dtex
- F: Deckvlies:: 30% BA140 (PA6/CoPA K/M 50%/50%) 8 dtex, 70% TM 5100 6.7dtex
- G:Deckvlies:: 50% BA140 (PA6/CoPA K/M 50%150%) 3.3dtex, 50% TM 5100 6.7dtex

Auf der oben beschriebenen Thermofixiereinrichtung gemäss Fig. 1 wurde der so hergestellte unbehandelte Pressfilz von der Papierseite des späteren Pressfilzes her (Schicht G) mit 178°C mit einem Liniendruck von 4 kg/cm mit einer Verweilzeit von 2 min auf dem Heizkalander 2 aufgeheizt, wobei die Klebekomponente aktiviert, d.h. aufgeschmolzen wurde. Unmittelbar darauf wurde von der gleichen Seite her mit dem Kühlschuh 5 mit 15 °C und mit einer Verweilzeit von 30 sec unter Spannung mit einem Liniendruck von 1 kg/cm gekühlt. Durch diese Behandlungsschritte wurde eine sehr glatte Oberfläche auf der Papierseite des Pressfilzes erzeugt.

### VERGLEICHSBEISPIEL (Beispiel 2):

Wie Beispiel 1, aber es wurde auf die Kühlung verzichtet. Der sich ergebende Pressfilz ist kein Pressfilz nach der vorliegenden Erfindung und weist eine wesentlich gröbere und weniger glatte Oberflächenstruktur auf.

Ein Vergleich verschiedener Parameter der beiden Pressfilze gemäss dem Beispiel und dem Vergleichsbeispiel erlaubt die nachstehende Messwertetabelle. Messwertetabelle:

| Beispiel | Permeabilität* | Oberflächenrauheit | |
|---|---|---|---|
| | l/m²sec, 200 Pa | Rz = Rautiefe mikro-m | Ra = Mittenrauwert mikro-m |
| 1 | 135 | 139 | 14 |
| 2 | 180 | 318 | 38 |

| | | | |
|---|---|---|---|
| *) gemessen mit Luft von 22°C bei 200 Pa Prüfdruck, Messfläche 50 cm². | | | |

Verwendet zur Messung der Rauigkeitswerte wurde ein berührungsloses Mikrofokusgerät mit:
Messfleckdurchmesser: 1 mikro-m
Bezugswellenlänge: 8 mm
Gesamtmessstrecke: 40 mm
Schrittweite: 5 mikro-m
Auswertung nach DIN 4776

Die Tabelle zeigt, dass sich die Oberflächenrauheit durch die Erfindung etwa halbieren lässt. Der Einfluss der Abkühlung des thermoplastischen Bindermaterials unter Druck mit einer glatten Fäche ist daher erheblich und klar nachweisbar. Mit der Glättung der Oberfläche geht zwar eine Reduzierung der Permeabilität einher, doch beträgt diese in der obigen Tabelle nur etwa 25%, was für den einsatz an einer Papiermaschine immer noch mehr als ausreichend ist.

### BEZEICHNUNGSLISTE

- 1: unbehandelter Pressfilz
- 1.1: Aussenseite des unbehandelten Pressfilzes
- 1.2: Innenseite des unbehandelten Pressfilzes
- 2: geheizte Kalanderwalze
- 3: ungeheizte Kalanderwalze
- 4: zusätzlichen Anpresswalze
- 5: Kühlschuh

## Patentansprüche

1. Verfahren zur Herstellung eines Pressfilzes mit einer geglätteten permeablen papierseitigen Oberfläche geeignet für den Einsatz in der Pressenpartie einer Papiermaschine, wobei der Pressfilz eine an die papierseitige Oberfläche angrenzende und angrenzend an diese papierseitige Oberfläche durch ein thermoplastisches Bindermaterial verbundene und verfestigte Vlieslage aufweist, und wobei das Verfahren die folgenden Schritte umfasst:
a) Herstellen eines unbehandelten Pressfilzes, welcher eine Vlieslage und thermoplastisches Bindermaterial enthält, bei welchem das thermoplastische Bindermaterial in Form von thermoplastischen Klebefasern und/oder als thermoplastische Klebekomponente von Bikomponentenfasern in der Vlieslage verteilt enthalten ist;
b) Erhitzen des unbehandelten Pressfilzes auf eine über dem Schmelzpunkt des thermoplastischen Bindermaterials liegende Temperatur und
c) Abkühlen des erhitzten Pressfilzes auf eine unter dem Schmelzpunkt des thermoplastischen Bindermaterials liegende Temperatur
**dadurch gekennzeichnet, dass** das Abkühlen unter Druckausübung mit einer glatten Fläche stattfindet: wobei der unbehandelte Pressfilz mit der papierseitigen Oberfläche zum Erhitzen über eine geheizte Kalanderwalze und zum Abkühlen über eine Kühlfläche bewegt wird;
wobei der unbehandelte Pressfilz als Endlosbahn ausgebildet und unter Spannung um die geheizte Kalanderwalze und eine zu dieser parallel angeordnete weitere Kalanderwalze sowie zwischen den beiden Kalanderwalzen unter einem Anpressdruck mit der papierseitigen Oberfläche über die glatte Kühlfläche geführt wird; und
wobei die papierseitige Oberfläche der Vlieslage durch Druckausübung mit der glatten Kühlfläche während ihrer Abkühlung von einer Temperatur oberhalb der Schmelztemperatur des thermoplastischen Bindermaterials auf eine Temperatur unterhalb dieser Schmelztemperatur geglättet wird.

2. Verfahren nach Anspruch 1, **dadurch gekennzeichnet, dass** der unbehandelte Pressfilz thermofixiert wird und dass der unbehandelte Pressfilz beim Erhitzen mit einer zum Thermofixieren ausreichenden Spannung beaufschlagt wird.

3. Verfahren nach Anspruch 2, **dadurch gekennzeichnet, dass** als thermoplastisches Bindermaterial ein Material verwendet wird, welches einen Schmelzpunkt aufweist, welcher höher als 110°C, jedoch niedriger als die für das Thermofixieren erforderliche Temperatur ist.

4. Verfahren nach einem der Ansprüche 1 - 3, **dadurch gekennzeichnet, dass** für die Vlieslage thermoplastische Fasern verwendet werden, welche einen Schmelzpunkt aufweisen, welcher höher, insbesondere mindestenes 30°C höher als der Schmelzpunkt des thermoplastischen Bindermaterials und vorzugsweise auch höher als die für das Thermofixieren erforderliche Temperatur ist.

5. Verfahren nach einem der Ansprüche 1 - 4, **dadurch gekennzeichnet, dass** das thermoplastische Bindermaterial ausgewählt wird aus:
- ein Copolyamid, das aus mindestens zwei verschiedenen Monomeren aus der Gruppe Caprolactam, Laurinlactam, Dicarbonsäuren mit 4-12 C-Atomen, Terephthalsäure, Isophthalsäure, Dimersäure mit C-Atomen, lineare alphaomega -Diamine mit 2-12 C-Atomen und 2-Methylpentamethylendiamin, aufgebaut ist; oder
- ein Polyamid aus der Gruppe Polyamid 12, Polyamid 11, Polyamid 6; oder
- ein Polyolefin, insbesondere Polyethylen, Polypropylen oder Polybutylen; oder
- ein thermoplastisches Elastomer auf Polyamid-, Silikon-, Polyurethan-, Polyester- oder Polyether-Basis; oder
- ein Copolyester.

6. Verfahren nach einem der Ansprüche 1 - 5, **dadurch gekennzeichnet, dass** für die Vlieslage thermoplastische, schmelzgesponnene Polymerfasern, ggf. teilweise in Form von Flachfasern, verwendet werden, welche insbesondere aus Polyamid aus der Gruppe Polyamid 6, Polyamid 46, Polyamid 66, Polyamid 12, Polyamid 11, Polyamid 6T/66, Polyamid 6T/6, Polyamid 6T/61 oder Polyamid 12T bestehen.

7. Verfahren nach einem der Ansprüche 1 - 6, **dadurch gekennzeichnet, dass** für die Vlieslage nur Fasern mit einem Titer kleiner als 30 dtex, vorzugsweise kleiner als 8 dtex, verwendet werden.

8. Verfahren nach den Ansprüchen 5 - 7, **dadurch gekennzeichnet, dass** die genannten Materialien mit der tieferschmelzenden Komponente jeweils für das thermoplastische Bindermaterial und mit der höherschmelzenden Komponente jeweils für die Vlieslage in einer der folgenden Kombinationen verwendet werden:
- Copolyamid mit Schmelzpunkt im Bereich 110-180°C und Polyamid 6; oder
- Copolyamid mit Schmelzpunkt im Bereich 110-180°C und Polyamid 66; oder
- Polyamid 6 und Polyamid 66; oder
- Polyamid 12 und Polyamid 6; oder
- Polyamid 12 und Polyamid 66; oder
- Polyamid 6 und Polyamid 6T/61; oder
- Polyamid 6 und Polyamid 6T/66; oder
- Polyamid 6 und Polyamid 6T/6.

9. Verfahren nach einem der Ansprüche 1 - 8, **dadurch gekennzeichnet, dass** als Gewichtsverhältnis zwischen dem thermoplastischen Bindermaterial und der Vlieslage ein Gewichtsverhältnis zwischen 5 : 95 und 95 : 5 gewählt wird, vorzugsweise jedoch zwischen 15 :85 und 35 : 65.

10. Verfahren nach einem der Ansprüche 1 - 9, **dadurch gekennzeichnet, dass** bei der Herstellung des unbehandelten Pressfilzes Bikomponentenfasern für die Vlieslage verwendet werden, bei welchen die beiden Komponenten in Kern-Mantel-Konfiguration und/oder Seite-Seite-Konfiguration vorliegen.

11. Verfahren nach einem der Ansprüche 1 - 10, **dadurch gekennzeichnet, dass** bei der Herstellung des unbehandelten Pressfilzes unter Verwendung von Bikomponentenfasern in der Vlieslage den Bikomponentenfasern feintitrige Monokomponentenfasern und/oder Flachfasern beigemischt werden.

12. Verfahren nach einem der Ansprüche 1 - 11, **dadurch gekennzeichnet, dass** der unbehandelte Pressfilz aus mehreren Vlieslagen hergestellt wird, wobei vorzugsweise mindestens eine der weiteren Vlieslagen ebenfalls ein thermoplastisches Bindermaterial in Form von thermoplastischen Klebefasern und/oder als thermoplastische Klebekomponente von Bikomponentenfasern verteilt enhält.

13. Verfahren nach Anspruch 12, **dadurch gekennzeichnet, dass** für die an die papierseitige Oberfläche angrenzende Vlieslage Fasern mit einem feineren Titer als für die wenigstens eine weitere Vlieslage verwendet werden.

14. Verfahren nach einem der Ansprüche 12 - 13, **dadurch gekennzeichnet, dass** in der an die Oberfläche des Pressfilzes angrenzenden Vlieslage das Verhältnis des thermoplastischen Bindermaterials zu dem übrigen Material dieser Lage grösser gewählt wird als in einer der weiteren Vlieslagen.

15. Verfahren nach einem der Ansprüche 1 - 14, **dadurch gekennzeichnet, dass** der unbehandelte Pressfilz ein Grundgewebe oder ein Grundgelege umfasst und dass die Vlieslage/n auf das Grundgewebe oder das Grundgelege aufgenadelt wird/werden.

## Claims

1. Method for the production of a press felt with a smoothed permeable paper-side surface suitable for use in the press section of a paper machine, with the press felt having a nonwoven layer that lies on the paper-side surface and is connected and fixed to this paper-side surface by a thermoplastic binder material, and with the method comprising the following steps:
a) Production of an untreated press felt that contains a nonwoven layer and thermoplastic binder material, in which the thermoplastic binder material is distributed in the nonwoven layer in the form of thermoplastic adhesive fibres and/or as a thermoplastic adhesive component of bicomponent fibres;
b) heating of the untreated press felt to a temperature above the melting point of the thermoplastic binder material; and
c) cooling of the heated press felt to a temperature below the melting point of the thermoplastic binder material,
**characterised in that** the cooling is effected by the application of pressure with a smooth surface, with the untreated press felt with the paper-side surface being moved across a heated calender roll for heating and across a cooling surface for cooling;
with the untreated press felt being designed as a continuous roll and being guided under tension around the heated calender roll and an additional calender roll arranged parallel thereto, as well as between the two calender rolls under contact pressure with the paper-side surface above the smooth cooling surface; and
with the paper-side surface of the nonwoven layer being smoothed by the application of pressure with the smooth cooling surface during cooling thereof from a temperature above the melting temperature of the thermoplastic binder material to a temperature below this melting temperature.

2. Method according to claim 1, **characterised in that** the untreated press felt is thermoset and the untreated press felt is pressurised during heating with sufficient tension for thermosetting.

3. Method according to claim 2, **characterised in that** the thermoplastic binder material used is a material that has a melting point that is higher than 110°C, but lower than the temperature required for thermosetting.

4. Method according to one of claims 1 to 3, **characterised in that**, for the nonwoven layer, thermoplastic fibres are used that have a melting point that is higher, in particularly at least 30°C higher, than the melting point of the thermoplastic binder material and preferably also higher than the temperature required for thermosetting.

5. Method according to one of claims 1 to 4, **characterised in that** the thermoplastic binder material is selected from:
- a copolyamide that is made up of at least two different monomers from the group caprolactam, laurolactam, dicarboxylic acids with 4-12 C atoms, terephthalic acid, isophthalic acid, dimer acid with C atoms, linear alpha-omega diamines with 2-12 C atoms and 2-methyl-pentamethylene-diamine; or
- a polyamide from the group polyamide 12, polyamide 11, polyamide 6; or
- a polyolefin, in particular polyethylene, polypropylene or polybutylene; or
- a thermoplastic elastomer based on polyamide, silicon, polyurethane, polyester or polyether; or
- a copolyester.

6. Method according to one of claims 1 to 5, **characterised in that**, for the nonwoven layer, thermoplastic, melt-spun polymer fibres are used, including some in the form of flat fibres if applicable, which melt-spun polymer fibres particularly consist of polyamide from the group polyamide 6, polyamide 46, polyamide 66, polyamide 12, polyamide 11, polyamide 6T/66, polyamide 6T/6, polyamide 6T/61 or polyamide 12T.

7. Method according to one of claims 1 to 6, **characterised in that** only fibres with a yarn count of less than 30 dtex, and preferably less than 8 dtex, are used for the nonwoven layer.

8. Method according to one of claims 5 to 7, **characterised in that** the stated materials with the component with the lower melting point are used in each case for the thermoplastic binder material and the stated materials with the component with the higher melting point are used in each case for the nonwoven layer in one of the following combinations:
- copolyamide with a melting point in the range 110-180°C and polyamide 6; or
- copolyamide with a melting point in the range 110-180°C and polyamide 66; or
- polyamide 6 and polyamide 66; or
- polyamide 12 and polyamide 6; or
- polyamide 12 and polyamide 66; or
- polyamide 6 and polyamide 6T/6I; or
- polyamide 6 and polyamide 6T/66; or
- polyamide 6 and polyamide 6T/6.

9. Method according to one of claims 1 to 8, **characterised in that** a weight ratio of between 5:95 and 95:5, preferably between 15:85 and 35:65, is selected as the weight ratio between the thermoplastic binder material and the nonwoven layer.

10. Method according to one of claims 1 to 9, **characterised in that**, when producing the untreated press felt, bicomponent fibres in which the two components are present in a core/sheath configuration and/or a side/side configuration are used for the nonwoven layer.

11. Method according to one of claims 1 to 10, **characterised in that**, when producing the untreated press felt with the use of bicomponent fibres in the nonwoven layer, monocomponent fibres and/or flat fibres with a fine yarn count are added to the bicomponent fibres.

12. Method according to one of claims 1 to 11, **characterised in that** the untreated press felt is produced from several nonwoven layers, with a thermoplastic binder material in the form of thermoplastic adhesive fibres and/or in the form of bicomponent fibres as a thermoplastic adhesive component also being preferably distributed in at least one of the other nonwoven layers.

13. Method according to claim 12, **characterised in that** fibres with a finer yarn count than for the at least one additional nonwoven layer are used for the nonwoven layer that lies on the paper-side surface.

14. Method according to one of claims 12 to 13, **characterised in that**, in the nonwoven layer that lies on the surface of the press felt, the ratio of the thermoplastic binder material to the other material of this layer is greater than in one of the additional nonwoven layers.

15. Method according to one of claims 1 to 14, **characterised in that** the untreated press felt comprises a base fabric or a base bonded fabric and **in that** the nonwoven layer(s) is/are pinned onto the base fabric or base bonded fabric.

## Revendications

1. Procédé pour la fabrication d'un feutre de section de presse avec une surface côté papier polie et perméable de façon spécifique pour l'utilisation dans la partie de pressage d'une machine à papier, dans lequel le feutre de presse présente de façon contigüe à la surface côté papier une couche de voile qui est liée et fixée de façon contigüe à cette surface côté papier par un matériau liant thermoplastique, et dans lequel le procédé comprend les étapes suivantes :
a) fabrication d'une feutre de presse non traité, lequel contient une couche de voile et un matériau liant thermoplastique, dans laquelle le matériau liant thermoplastique est contenu sous la forme de fibres de colle thermoplastiques et/ou des composants de colle thermoplastique en fibres bicomposants réparties dans la couche de voile ;
b) chauffage du feutre de presse non traité jusqu'à une température située au dessus du point de fusion du matériau liant thermoplastique ; et
c) refroidissement du feutre de presse chauffé jusqu'à une température située en dessous du point de fusion du matériau liant thermoplastique
**caractérisé en ce que** le refroidissement à lieu sous exercice d'une pression par une surface polie ; dans lequel le feutre de presse non traité est déplacé avec sa surface côté papier sur un rouleau de calandrage chauffé pour le chauffage et sur un rouleau de calandrage refroidi pour le refroidissement ;
dans lequel le feutre de presse non traité est réalisé sous une forme continue et est amené sous tension autour du rouleau de calandrage chauffé et d'un autre rouleau de calandrage disposé parallèlement au premier ainsi que, entre les deux rouleaux de calandrage, par l'exercice d'une pression de la surface côté papier sur une surface froide polie ; et
dans lequel la couche côté papier de la couche de voile est lissée par l'exercice d'une pression contre la surface froide polie pendant son refroidissement depuis une température supérieure à la température de fusion des matériaux liants thermoplastiques jusqu'à une température inférieure à cette température de fusion.

2. Procédé selon la revendication 1, **caractérisé en ce que** le feutre de presse non traité est thermofixé et **en ce que** le feutre de presse non traité est alimenté lors du chauffage avec une tension suffisante pour la thermofixation.

3. Procédé selon la revendication 2, **caractérisé en ce qu'**est utilisé comme matériau liant thermoplastique un matériau présentant un point de fusion qui est à la fois supérieur à 110°C et inférieur à la température nécessaire à la thermofixation.

4. Procédé selon l'une quelconque des revendications 1-3 ;
**caractérisé en ce que** des fibres thermoplastiques sont utilisées pour la couche de voile, lesquelles présentent un point de fusion qui est plus haut, en particulier plus haut d'au moins 30°C, que le point de fusion du matériau liant thermoplastique et de préférence plus haut aussi que la température nécessaire à la thermofixation.

5. Procédé selon l'une quelconque des revendications 1-4, **caractérisé en ce que** le matériau liant thermoplastique est choisi par parmi :
- un copolyamide, qui est réalisé à partir d'au moins deux monomères différents du groupe caprolactame, lauryllactame, acides dicarboxyliques avec 4-12 atomes C, acide téréphtalique, acide isophtalique, acide dimérique avec atomes C, alpha- oméga -diamine avec 2-12 atomes C, et 2-méthylpentaméthylediamine linéaire ; ou
- un polyamide du groupe polyamide 12, polyamide 11, polyamide 6 ;
- un polyoléfine en particulier polyéthylène, polypropylène ou polybutène ; ou
- un élastomère thermoplastique à base polyamide, silicone, polyuréthane, polyester ou polyéther ; ou
- un copolyester.

6. Procédé selon l'une quelconque des revendications 1-5, **caractérisé en ce que** sont utilisés pour la couche de voile thermoplastique des fibres polymère filées par fusion, le cas échéant en partie en forme de fibres plates, lesquelles sont constituées en particulier de polyamide du groupe polyamide 6, polyamide 46, polyamide 66, polyamide 12, polyamide 11, polyamide 6T/66, polyamide 6T/6, polyamide 6T/6I ou polyamide 12T.

7. Procédé selon l'une quelconque des revendications 1-6, **caractérisé en ce que** sont utilisés pour la couche de voile uniquement des fibres d'un titre plus petit que 30 dtex, de préférence plus petit que 8 dtex.

8. Procédé selon l'une quelconque des revendications 5-7, **caractérisé en ce que** les matériaux nommés sont utilisés dans l'une des combinaisons suivantes, avec les composants à fusion basse respectivement pour le matériau liant thermoplastique et avec les composants à fusion élevée respectivement pour la couche de voile :
- copolyamide avec point de fusion dans l'intervalle 110-180°C et polyamide 6 ; ou
- copolyamide avec point de fusion dans l'intervalle 110-180°C et polyamide 66 ; ou
- polyamide 6 et polyamide 66 ; ou
- polyamide 12 et polyamide 6 ; ou
- polyamide et polyamide 66 ; ou
- polyamide 6 et polyamide 6T/6I ; ou
- polyamide 6 et polyamide 6T/66 ; ou
- polyamide 6 et polyamide 6T/6.

9. Procédé selon l'une quelconque des revendications 1-8, **caractérisé en ce que** les proportions en poids entre le matériau liant thermoplastique et la couche de voile sont choisies entre 5 : 95 et 95 : 5, de préférence entre 15 : 85 et 35 : 65.

10. Procédé selon l'une quelconque des revendications 1-9, **caractérisé, en ce que** lors de la fabrication du feutre de presse non traité, sont utilisés pour la couche de voile des fibres bicomposants, pour lesquelles les deux composants sont disposés selon une configuration noyau-manteau ou côte à côte.

11. Procédé selon l'une quelconque des revendications 1-10, **caractérisé en ce que** lors de la fabrication du feutre de presse non traité par utilisation de fibres bicomposants dans la couche de voile, des fibres à titre fin monocomposant et/ou plates sont mélangées aux fibres bicomposants.

12. Procédé selon l'une quelconque des revendications 1-11, **caractérisé en ce que** le feutre de presse non traité est fabriqué à partir de plusieurs couches de voile, dans lequel de préférence au moins une des couches de voile contient un matériau liant thermoplastique sous forme de fibres de colle thermoplastiques et/ou aussi bien que de composants de colle thermoplastique en fibres bicomposants répartis.

13. Procédé selon la revendication 12, **caractérisé en ce que**, pour la couche de voile contigüe à la surface côté papier, sont utilisées des fibres avec un titre plus fin que pour au moins une autre couche de voile.

14. Procédé selon l'une quelconque des revendications 12-13, **caractérisé en ce que**, dans la couche de voile contigüe à la surface côté papier, la proportion de matériau liant thermoplastique par rapport à l'autre matériau de cette couche est choisie plus grande que dans une autre couche de voile.

15. Procédé selon l'une quelconque des revendications 1-14, **caractérisé en ce que** le feutre de presse non traité comprend une base tissée ou une base non-tissée et **en ce que** la(les) couche(s) de voile est(sont) aiguilletée(s) sur la base tissée ou la base non-tissée.
